Europäisches Patentamt

(19) European Patent Office

Office européen des brevets

(11) Publication number: **0 213 544**
**B1**

(12) **EUROPEAN PATENT SPECIFICATION**

(45) Date of publication of patent specification: **28.11.90**

(21) Application number: **86111491.6**

(22) Date of filing: **19.08.86**

(51) Int. Cl.⁵: **G 01 S 17/36,** G 01 S 17/08,
G 01 S 7/48

(54) **Distance sensing apparatus.**

(30) Priority: **21.08.85 US 767949**

(43) Date of publication of application:
**11.03.87 Bulletin 87/11**

(45) Publication of the grant of the patent:
**28.11.90 Bulletin 90/48**

(84) Designated Contracting States:
**DE FR GB IT NL**

(56) References cited:
**DE-A-2 719 214**
**DE-A-2 719 214**
**US-A-3 815 994**
**US-A-3 937 574**
**US-A-4 561 748**

**PATENT ABSTRACTS OF JAPAN, vol. 6, no. 27
(P-102)905r, 17th February 1982;& JP-A-56 147
008**

**IDEM
MESSEN & PRÜFEN, no. 2,November 1981,
pages 757-761, Bad Wörlshofen, DE; F.E.
WAGNER: "Selbstkalibrierende Messsysteme"**

(73) Proprietor: **HONEYWELL INC.**
**Honeywell Plaza**
**Minneapolis Minnesota 55408 (US)**

(72) Inventor: **Stauffer, Norman L.**
**7177 South Ulster Street**
**Englewood Colorado 80112 (US)**

(74) Representative: **Herzbach, Dieter et al**
**Honeywell Europe S.A. Holding KG Patent- und
Lizenzabteilung Kaiserleistrasse 55 Postfach 184
D-6050 Offenbach am Main (DE)**

## Description

The present invention relates to an apparatus according to the preamble of claim 1. Such an apparatus is for instance known from DE—A—2 719 214. The focusing apparatus shown there comprises two beam producing means positioned a predetermined distance from each other with respect to a reflecting surface. Both beam producing means are energized at different points of time, and an energy responsive means therefor receives energy reflected from said surface at the time where radiation is emitted from the beam producing means. The amount of the received radiation is stored in storage devices and processing means serve to evaluate the quotient of the stored radiation amounts.

Furthermore, from "Patent Abstracts of Japan", Volume 6, No. 27 (P-102), February 17, 1982, a distance detector is known where two light emitting diodes and a phototransistor are disposed in a fixed and equal distance from a target to be sensed. The light emitting diodes are driven by pulsed signals which are shifted by 90° in phase. The reflected light is sensed by the phototransistor and its output signal is filtered and multiplicated with a pulse signal from an oscillator driving the light emitting diodes.

Departing from this prior art, it is the object of the present invention to devise a more accurate distance sensing apparatus. This object is achieved according to the characterizing features of the independent claim. Further advantageous embodiments of the inventive apparatus may be taken from the dependent claims.

The present distance sensing apparatus makes use of a phase shift between 120° and 180° with respect to the beams radiated from the beam producing means. The distance of the apparatus from a remote surface is evaluated by a phase sensing means which produces an output signal indicative of the phase of a resultant signal which is the vector sum of the two reflected beams. Under reference to the figures of the attached drawing, the inventive apparatus shall be further described, where

FIGURE 1 shows a schematic diagram of a preferred embodiment of the present invention;

FIGURE 2 shows a vector diagram of the fluxes produced by the energy sources of FIGURE 1;

FIGURE 3 is a graph showing the variation of phase angle of the resultant energy in degrees with the surface distance in millimeters;

FIGURE 4 is a schematic diagram of an alternate embodiment of the present invention;

FIGURE 5 is a vector diagram of the fluxes produced by the energy sources of FIGURE 4; and

FIGURE 6 shows a device for correcting a problem that may arise with highly specular surfaces.

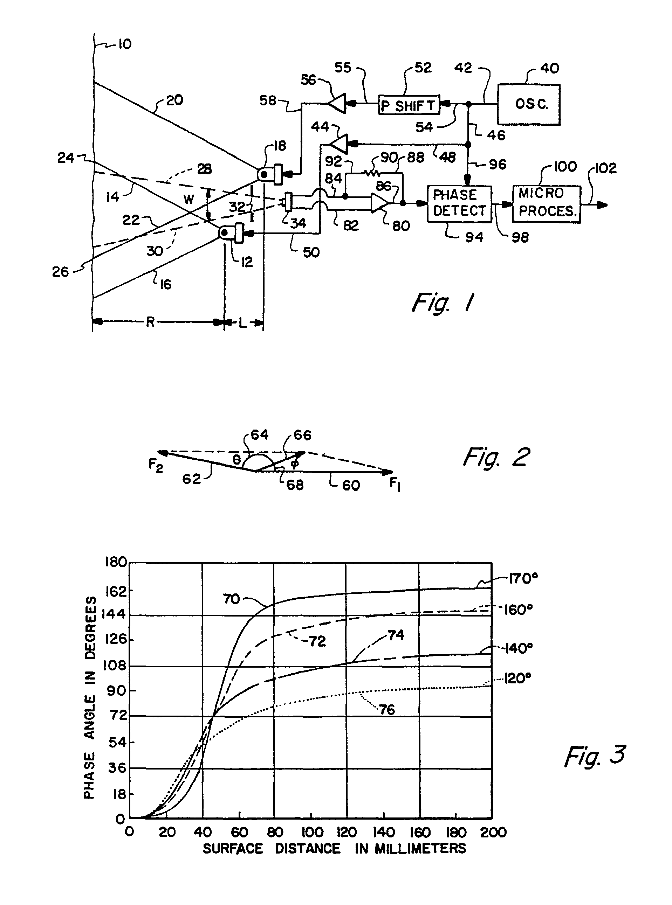

In FIGURE 1, a surface 10 is shown the distance to which is to be measured. Surface 10 is shown as at least partly diffuse so that energy reflected therefrom comes off at various angles.

A first energy projecting device 12 which, in the preferred embodiment, is an infrared emitting LED, is shown located at the unknown distance R from the surface 10 and projects a beam of infrared energy over paths such as shown by lines 14 and 16 to the surface 10. A second energy projecting device 18 which is also, in the preferred embodiment, an infrared emitting LED, is shown located more remote from surface 10 than LED 12 by a predetermined distance L. LED 18 is shown above and behind LED 12 so as to send a second beam of infrared energy along paths such as shown by lines 20 and 22 to the surface 10. The beams of energy from LEDs 12 and 18 are shown to overlap on the surface 10 in the area between points 24 and 26 which, of couse, also extends into and out of the plane of FIGURE 1. Energy from this area is reflected off the surface 10 along paths such as shown by dashed lines 28 and 30 through an aperture shown by reference numeral 32 to an energy responsive detector 34 which, in the preferred embodiment, is a photo diode preferably a silicon photo detector which is responsive to infrared energy.

An oscillator 40 is shown in FIGURE 1 operable to produce an output on a line 42 which is of predetermined frequency and which is in turn presented to a driver amplifier 44 through lines 46 and 48. The output of amplifier 44 is presented over a line 50 to drive LED 12 at a first frequency and phase. The signal on line 42 is also presented to a phase shifter 52 via line 54 so that the signal from oscillator 40 is shifted by a predetermined amount $\ominus$. This phase shifted signal is present via line 55 to a second driver amplifier 56 which in turn presents the phase shifted signal along a line 58 to drive LED 18 at the first frequency but at a second phase. Thus, it is seen that LED 12 and LED 18 are both driven at the frequency of oscillator 40, but the phase of the energy produced by LED 18 is shifted with respect to the phase of the energy produced by LED 12. It should be understood that the amount of phase shift is not particularly critical to the present invention (although, with larger phase shifts, i.e. 120 degrees to 180 degrees, the sensitivity to range changes tends to increase), nor is the frequency of oscillator 40 or the distance L, these values being chosen by those skilled in the art for best performance. In one experiment, the frequency was chosen to be 10 KHz, L was 40 mm and the phase shift was a large angle between 120 degrees and 180 degrees.

The reflected energy from the area between points 24 and 26 and detected by detector 34 will be a vector summation of the fluxes produced by the LEDs 12 and 18. More particularly, if $I_1$ is the radiant intensity of LED 12, then the flux density $E_1$ from LED 12 is:

$$E_1 = \frac{I_1}{R^2} \tag{1}$$

Similarly, if $I_2$ is the radiant intensity of LED 18, then the flux density $E_2$ form LED 18 becomes:

$$E_2 = \frac{I_2}{(R + L)^2} \qquad (2)$$

If detector 34 has an area $Q$ and if the aperture 32 is such that the detector subtends an angle $W$, then the flux $F_1$ received by the detector from LED 12 is:

$$F_1 = E_1 \times \frac{KWQ}{\pi} \qquad (3)$$

Where $K$ is the fraction of radiation reflected from the surface 10. Substituting equation 1:

$$F_1 = \frac{I_1}{R^2} \times \frac{KWQ}{\pi} \qquad (4)$$

Likewise, the flux $F_2$ received by detector 34 from LED 18 is:

$$F_2 = E_2 \times \frac{KWQ}{\pi} \qquad (5)$$

Substituting equation 2:

$$F_2 = \frac{I_2}{(R + L)^2} \times \frac{KWQ}{\pi} \qquad (6)$$

It is seen from equations 4 and 6 that the flux received by the detector is related to the distance, $R$, to the remote surface and if the factor $K$ were constant, the measurement of $F_1$ or $F_2$ would produce an indication of the unknown distance $R$. $K$ is, however, dependent upon the quality of the surface 10 and is not constant. Accordingly, measurement of the fluxes $F_1$ and $F_2$ will only be acceptable if $K$ can be made to drop out. For example, if the ratio of $F_1$ and $F_2$ is taken, $K$ and also $WQ$ and $\pi$ drop out by the cancellation effects of division. Accordingly, I can obtain an output indicative of the distance $R$ by measuring a ratio of $F_1$ and $F_2$. In a preferred embodiment I obtain an expression which involves this ratio by measuring the phase of the signal received by detector 34.

Since the LEDs are modulated by the same frequency but the phase of one is shifted with respect to the other by an amount $\ominus$ which, as described above in a preferred embodiment is a fairly large angle, then the total flux received by detector 34 is the vector sum of $F_1$ and $F_2$ as is shown, for example, in FIGURE 2 of the drawings. In FIGURE 2, the flux received by detector 34 from LED 12 is shown as an arrow 60 extending to the right and labelled $F_1$. The flux received by detector 34 from LED 18 is shown in FIGURE 2 as an arrow 62 extending to the left at a large angle $\theta$ labelled 64 about 170 degrees from arrow 60 and labelled $F_2$.

The resultant vector is shown by an arrow 66 in FIGURE 2 and this lies at an angle 68 labelled $\emptyset$ in

FIGURE 2. This resultant vector 66 will be the magnitude and phase of the signal produced by detector 34 when it is set to view the area between points 24 and 26 on surface 10 and, as will be explained, measurement of angle $\emptyset$ produces an indication of the distance $R$ as desired. More particularly, from FIGURE 2 it can be shown that the tangent of phase angle $\emptyset$ for the resultant flux vector 66 is:

$$\frac{Sin\ \theta}{\dfrac{F_1}{F_2} + Cos\ \theta} \qquad (7)$$

and because the denominator involves the ratio

$$\frac{F_1}{F_2},$$

the undesirable variable $K$ as well as the constants $W$, $Q$ and $\pi$ drop out. By substitution of equations 4 and 6 into equation 7, the phase angle $\emptyset$ can be expressed as:

$$\emptyset = \tan^{-1} \left[ \frac{Sin\ \theta}{\dfrac{I_1}{I_2} \times \dfrac{(R + L)^2}{R^2} + Cos\ \theta} \right] \qquad (8)$$

It is seen from equation 8 that the factors $KWQ$ and $\pi$ have all dropped out leaving the phase angle $\emptyset$ related only to the ratio of the radiant intensities of the LEDs, the sin and cosin of the known phase shift $\ominus$, the known distance $L$, and the unknown distance $R$. Thus, $\emptyset$ will vary with $R$ in a somewhat non-linear fashion as is best seen in FIGURE 3.

In FIGURE 3, a graph showing different phase angles for the resultant vector 66 of FIGURE 2 compared with the distance $R$ to the surface 10 with various amounts of phase shift is depicted. In Figure 3,

$$\frac{I_1}{I_2}$$

is 0.3 and $L$ is 40 millimeters. The solid line shown by reference numeral 70 represents the curve when the phase shift is 170 degrees. The dashed line 72 shows the variation when the phase shift is 160 degrees, the solid-dash line 74 shows the variation when the phase shift is 140 degrees, and dotted line 76 shows the variation when the phase shift is 120 degrees. The invention uses a large phase shift (i.e. 120—180 degrees) since the curve, at the upper end of the measurement, has the greatest variation. Other factors involved, however, are the distance $L$ and the radiant intensities of LEDs 12 and 18. Accordingly, it will be best to choose the desired values in accordance with the desired output for a particular use.

While FIGURE 3 shows variations only between 0 and 200 millimeters for the distance R, it should be understood that the variations can be extended much further and surfaces up to a number of meters from the detectors can be measured with a fair degree of accuracy. Furthermore, when used for camera autofocus, it has been found that a curve such as solid line 70 fairly closely approximates the curve that is found when lens motion is plotted against distance to remote object. In other words, the lens moves in the camera by a non-linear amount which, at the larger distances approaches a flat curve since camera focus beyond several meters is substantially at infinity. Because of this approximation, by properly choosing the phase shift, a direct drive between the distance measuring circuit as shown in FIGURE 1 and the camera lens can be produced. It would not then be necessary to provide any characterized means to adjust the amount of camera lens motion for changes in distance since the output of the device of FIGURE 1 would approximate this without characterization.

I have also found that if the phase shift $\ominus$ is made 180 degrees, then the curve of FIGURE 3 approaches a vertical line at a surface distance which depends upon the ratio

$$\frac{I_1}{I_2}$$

and L. This feature would find use in rapidly indicating whether a surface were closer or further than a predetermined amount or, for example, on automobiles, to sound an alarm when an object was closer than a preset minimum.

Returning to FIGURE 1, the output of detector 34 which is indicative of the resultant flux vector 66 of FIGURE 2, is presented to an amplifier 80 by two conductors 82 and 84. The output of amplifier 80 is connected to the negative input thereof by conductor 86, a conductor 88, a resistor 90, and a conductor 92 for a feedback loop such as is commonly used for an operational amplifier. Conductor 86 is also connected to a phase detector 94 which receives a reference input from oscillator 40 via conductors 42, 46, and a conductor 96. Phase detector 94 operates to determine the phase angle $\emptyset$ of FIGURE 2 in order to produce an output representative of the function of equation 8 above. This output is seen on a conductor 98 which is presented to a microprocessor 100 for purposes of solving equation 8 and producing an output on a conductor 102 representative of the unknown distance R as desired. Of course, where the apparatus is driving a camera lens, the microprocessor 100 may not be necessary since, as explained above, the output from the phase detector following the non-linear curve for example 70 in FIGURE 3 may be sufficient to directly drive the camera lens. Many autofocus circuits already employ a microprocessor, however, and the output from phase detector 94 can therefore readily be used with that microprocessor to produce the autofocus signal. Likewise, when the phase shift is 180 degrees, the output from phase detector 94 will be abrupt and a micro processor would not be required. In industrial process applications, the output 102 may be used to control the position of a robot arm or other device necessary to perform a desired function on the surface 10 or just to make sure it is within the proper range of distances for assembly line work.

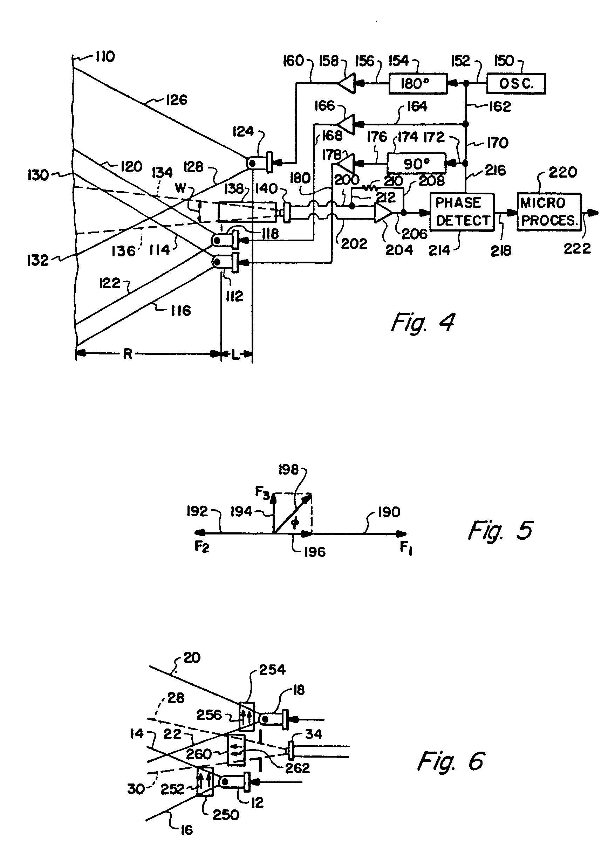

In the above-described apparatus, it is seen that a very accurate measurement of the distance to a remote surface can be made with inexpensive and easily available components connected in a simple and straight forward manner without need for close mechanical tolerances and which will not be bulky or costly. These desirable effects are produced by the measuring of the phase angle of the resultant flux vector. It should be understood that other techniques to take the ratio of $F_1$ and $F_2$ or other ways to produce a resultant flux vector may be devised by those skilled in the art, as for example, the schematic diagram of an alternate embodiment shown in FIGURE 4.

In FIGURE 4, a diffuse surface 110 is shown to which the unknown distance R is to be measured. A first source of energy 112 which, like in FIGURE 1, may be an infrared LED is shown projecting a beam of energy along paths such as 114 and 116 to the surface 110. A second energy source 118 is shown sending its beam along paths such as 120 and 122 to the surface 110. A third energy source 124, which may also be an infrared LED is shown sending its beam along paths such as 126 and 128 to the surface 110. As seen in FIGURE 3, LEDs 112 and 118 are located the unknown distance R from surface 10 whereas the third LED 124 is located more remotely than the other two LDEDs by a known distance L. As with FIGURE 1, the three LEDs project their energy onto the wall in such a way that there is an area between points 130 and 132 that overlap.

Energy from surface 110 is reflected back along paths such as shown by dashed lines 134 and 136 through an aperture shown as a tubular member 138 to a detector 140 sensitive to the radiation emitted by the LEDs. As with FIGURE 1, detector 140 may be a photo diode such as a silicon photo detector sensitive to infrared energy. As with FIGURE 1, tubular member 138 acting as an aperture restricts the reflected energy to a solid angle W and detector 140 will have a detection area Q.

An oscillator 150 in FIGURE 4 produces a signal of predetermined frequency on a line 152 which is presented first to a 180 degree phase shifter 154 whose ouptut on line 156 is presented to a driver amplifier 158 so as to produce a driving signal on line 160 to the LED 124 at the fixed frequency but at a phase shifted 180 degree with respect to the output of oscillator 150. The output of oscillator 150 on line 152 is also presented by way of a line 162 and a line 164 to a second drive amplifier 166 whose output is connected by way of a line 168 to the input of LED 118. Accordingly, LED 118 is driven by a signal which is at the same frequency and phase as the output of oscillator 150. A third path for the output of oscillator 150 is via line 152, line 162, a line 170, and a line 172 to a second phase shifting device 174 which shifts the phase of the signal from oscillator 150 by 90 degrees. The output of phase shifter 174 on a line 176 is present to a third driver amplifier 178 whose output on a line 180 drives LED 112. The input to LED 112 is therefore of the same frequency as the oscillator 150 but with a phase which has been shifted 90 degrees with respect thereto.

The area between points 130 and 132 on surface 110 which receive beams from all three LEDs, as was the caase in FIGURE 1, reflects energy, the vector sum of which is detected by detector 140. If the signal from LED 118 which is in phase with the oscillator output 150 is $F_1$, this vector is shown in FIGURE 5 as an arrow 190 extending to the right. The signal from LED 124 which is 180 degrees out of phase with the oscillator 150 is the signal $F_2$ seen in FIGURE 5 as an arrow 192 extending to the left and 180 degrees out of phase with the arrow 190. The flux from LED 112, $F_3$, is shown in FIGURE 5 as an arrow 194 extending upwardly and 90 degrees out of phase with respect to arrow 190. In FIGURE 5, the difference between flux $F_1$ and $F_2$ is shown as an arrow 196 extending to the right in phase with the arrow 190. The resultant vector shown as arrow 198 is the diagonal constructed between arrow 196 and 194 and represents the resultant flux from the three sources of energy, LEDs 112, 118, and 124.

The phase angle ∅ between the resultant vector 198 and flux vector 190 is measaured and, as will be shown, is representative of the distance R. More particularly, with the solid angle W subtended by the detector 140 having an area Q and with the intensity of radiation $I_1$ from LED 118, the flux density $E_1$ therefrom is given by the equation:

$$E_1 = \frac{I_1}{R^2} \qquad (9)$$

Similarly, with $I_2$ the radiant intensity of LED 124, then the flux density $E_2$ therefrom is given by the equation:

$$E_2 = \frac{I_2}{(R + L)^2} \qquad (10)$$

Likewise, with $I_3$ the radiant intensity of LED 112, then the flux density $E_3$ therefrom is given by the equation:

$$E_3 = \frac{I_3}{R^2} \qquad (11)$$

As with the analysis of FIGURE 1, the reflected flux from the output of LED 118 will be given by the equation:

$$F_1 = E_1 \times \frac{KWQ}{\pi} = \frac{I_1}{R^2} \times \frac{KWQ}{\pi} \qquad (12)$$

Similarly, the flux reflected from surface 10 that originated at LED 124 will be given by the equation:

$$F_2 = E_2 \times \frac{KWQ}{\pi} = \frac{I_2}{(R + L)^2} \times \frac{KWQ}{\pi} \qquad (13)$$

and the flux reflected from surface 110 originating at LED 112 will be given by:

$$F_3 = E_2 \times \frac{KWQ}{\pi} = \frac{I_3}{R^2} \times \frac{KWQ}{\pi} \qquad (14)$$

From FIGURE 5, the phase ∅ of the resultant flux given by arrow 198 can be shown to be given by the equation:

$$\emptyset = \tan^{-1} \left[ \frac{\dfrac{I_3}{R^2}}{\dfrac{I_1}{R^2} - \dfrac{I_2}{(R + L)^2}} \right] \qquad (15)$$

It is thus seen again that ∅ will be related to R since K, W, Q and π have cancelled out and R is the only variable in the equation through a non-linear relationship similar to that seen in FIGURE 3.

Returning again to FIGURE 4, the resultant flux received by detector 140 produces an output signal on lines 200 and 202 to an amplifier 204 having an output on line 206. The output 206 is connected by a line 208, a resistor 210 and a line 212 back to the negative input of amplifier 204 for a feedback circuit characteristic of operational amplifiers. The output line 206 is also connected to a phase detector 214 which has a reference signal from oscillator 150 presented thereto via lines 152, 162, 170, and a line 216. Phase detector 214 produces an output which is related to the angle ∅ and thus to the unknown distance R which appears on output line 218 presented to a microprocessor 220 which produces an output to any suitable utilization apparatus on a line 222. As mentioned before, it is possible to simulate the general curve structure for the camera lens motion with respect to distance and thus with camera autofocus system, microprocessor 220 may not be necessary. Since many cameras already have a microprocessor, however, it may be desirable to utilize the output from the phase detector through the microprocessor to position the camera lens.

When the surface such as 10 or 110 is highly specular, the return signal will appear to have originated from a source which is twice the distance from the detector as the surface 10 or 110 is. With respect to the specularly reflected energy the phase of the resultant vector would be given by the equation:

$$\emptyset = \tan^{-1}\left[\frac{\sin\theta}{\dfrac{I_1}{I_2} \times \dfrac{(2R + L)^2}{4R^2} + \cos\theta}\right] \quad (16)$$

and the system would work perfectly well on specular surfaces with this new equation. Where, however, the surface to be measured is a mixture of specular and diffuse then some arrangement for removing the specular reflection may be desirable. FIGURE 6 shows the detectors of FIGURE 1 with a correction apparatus for removing the specular part of a mixed signal. In FIGURE 6, the LED 12 is shown presenting its beam along paths such as lines 14 and 16 through a polarizer 250 which polarizes the energy from LED 12 in a first direction shown by arrows 252. In similar fashion, the energy from LED 18 presents its beam along paths such as lines 20 and 22 through a second polarizer 254, which polarizes in the same direction as polarizer 250 as shown by arrows 256.

The detector 34 receiving reflected energy along paths such as shown by dashed line 28 and 30 receives them through an analyzer 260 which is polarized 90 degrees with respect to the directions of polarization of polarizers 250 and 254 as shown by arrows 262. The effect of analyzer 262 then is to remove the polarized light that is coming from LEDs 12 and 18, as would be the case with a specular surface, but not to remove the diffuse light coming off of the surface, which is not polarized. Accordingly, the reception by the detector 34, although perhaps of lesser magnitude than was the case in connection with FIGURE 1, will still be only that portion of the signal which is diffuse in nature and accordingly will be analyzed by the system of FIGURE 1 in the same manner as previously described.

It is thus seen that I have provided a device for determining the distance to a surface which is both economical, uncomplicated, inexpensive, and accurate. Many obvious modifications will occur to those skilled in the art.

**Claims**

1. Apparatus for producing an output indicative of its distance (R) to a remote surface (10), comprising first beam producing means (12) arranged to project a first beam of modulated optical energy to said surface; second beam producing means (18) arranged to project a second beam of modulated optical energy to said surface, the second beam producing means positioned a predetermined distance (L) more remote from the surface than the first beam producing means;

energy responsive means (34) positioned to receive energy reflected from the surface according to the partially overlapping projections of the first and second beams; and

processing means (80, 94, 100) connected to said energy responsive means to produce an output signal indicative of the distance R to the remote surface, characterized in that the modulation signals of said first and second beams of optical energy are shifted in phase by an angle $\emptyset$ between 120° and 180° and that the processing means comprises phase sensing means (94) to produce an output signal indicative of the phase $\emptyset$ of the resultant signal, which is the vector sum of the two reflected beams.

2. Apparatus according to claim 1, characterized in that the phase of the resultant signal is evaluated according to the following equation

$$\emptyset = \tan^{-1}\left[\frac{\sin\theta}{\dfrac{I_1}{I_2} \times \dfrac{(R + L)^2}{R^2} + \cos\theta}\right]$$

wherein,

$I_1$ is the radiant intensity of the first beam, and $I_2$ is the radiant intensity of the second beam.

3. Apparatus according to claim 1, characterized by oscillator means (40) connected to drive the first and second beam producing means (12, 18) and connected to the phase sensing means (94) to supply a reference signal thereto.

4. Apparatus according to claim 1, characterized by third beam producing means (112) arranged to project a third beam of optical energy, having a third phase, to the surface where the resultant signal from the energy responsive means is representative of the vector sum of the reflections of the first, second and third beams.

5. Apparatus according to claim 4, characterized in that the second phase is 180° from the first phase and the third phase is 90° from the first phase.

6. Apparatus according to claim 1, characterized by polarizing means (250, 254) positioned between the first and second beams producing means (12, 18) and the surface, and an analyzer (260) positioned between the surface and the energy responsive means (34), polarized 90° from the polarizing means, to minimize specular reflections from reaching the energy responsive means.

**Patentansprüche**

1. Gerät zur Erzeugung eines Ausgangssignales entsprechend der Entfernung (R) zu einer entfernten Oberfläche (10) umfassend

eine erste Strahlerzeugungseinrichtung (12) zum Projizieren eines ersten Strahles von modulierter optischer Energie auf diese Oberfläche;

eine zweite Strahlerzeugungseinrichtung (18) zum Projizieren eines zweiten Strahles von modulierter optischer Energie auf diese Oberfläche, wobei die zweite Strahlerzeugungseinrichtung um eine vorbestimmte Entfernung (L) weiter als die erste Strahlerzeugungseinrichtung von der Oberfläche entfernt ist; eine energieempfindliche Einrichtung (34), die so positioniert ist, daß sie Energie empfängt, die von der Oberfläche entsprechend den teilweise überlkappenden Projektionen der ersten und zweiten Strahlen reflektiert wird; und

eine Verarbeitungseinrichtung (80, 94, 100), die an die energieempfindliche Einrichtung angeschlossen ist, um ein Ausgangssignal zu erzeugen, das die Entfernung (R) zu der entfernten Oberfläche anzeigt, dadurch gekennzeichnet, daß die Modulationssignale der ersten und zweiten Strahlen optischer Energie in der Phase um eine Winkel ⌀ zwischen 120° und 180° gegeneinander verschoben sind und daß die Verarbeitungseinrichtung eine Phasensensoreinrichtung (94) aufweist, um ein Ausgangssignal zu erzeugen, das die Phase ⌀ des resultierenden Signales anzeigt, welches die Vektorsumme der zwei reflektierten Strahlen darstellt.

2. Gerät nach Anspruch 1, dadurch gekennzeichnet, daß die Phase des resultierenden Signales gemäß folgender Gleichung ermittelt wird:

$$\emptyset = \tan^{-1}\left[\frac{\sin\theta}{\dfrac{I_1}{I_2} \times \dfrac{(R+L)^2}{R^2} + \cos\theta}\right]$$

wobei,

$I_1$ die Strahlintensität des ersten Strahles, und
$I_2$ die Strahlintensität des zweiten Strahles ist.

3. Gerät nach Anspruch 1, gekennzeichnet durch einen Oszillator (40) zur Ansteuerung der ersten und zweiten Strahlerzeugungseinrichtung (12, 18) sowie der Phasensensoreinrichtung (94), um dieser ein Referenzsignal zuzuführen.

4. Gerät nach Anspruch 1, gekennzeichnet durch eine dritte Strahlerzeugungseinrichtung (112) zum Projizieren eines dritten Strahles optischer Energie mit einer dritten Phase auf die Oberfläche, wobei das resultierende Signal der energieempfindlichen Einrichtung der Vektorsumme der Reflexionen des ersten, zweiten und dritten Strahles entspricht.

5. Gerät nach Anspruch 4, dadurch gekennzeichnet, daß die zweite Phase um 180° gegenüber der ersten Phase verschoben ist und daß die dritte Phase um 90° gegenüber der ersten Phase verschoben ist.

6. Gerät nach Anspruch 1, gekennzeichnet durch Polarisationseinrichtungen (250, 254) zwischen der ersten und zweiten strahlerzeugenden Einrichtung (12, 18) und der Oberfläche und durch einen Analysator (260) zwischen der Oberfläche und der energieempfindlichen Einrichtung (34), der um 90° gegenüber den Polarisationseinrichtungen polarisiert, um spiegelnde Reflexionen zu verringern, bevor sie die energieempfindliche Einrichtung erreichen.

**Revendications**

1. Appareil pour délivrer une sortie indicative de la distance (R) entre cet appareil et une surface éloignée (10), comprenant:

des premiers moyens de production de faisceau (12) conçus pour projeter un premier faisceau d'une énergie optique modulée vers ladite surface,

des seconds moyens dee production de faisceau (18) conçus pour projeter un second faisceau d'énergie optique modulée vers ladite surface, les seconds moyens de production de faisceau étant placés à une distance prédéterminée (L) plus éloignée de la surface que les premiers moyens de production de faisceau, des moyens sensibles à l'énergie (34) placés pour recevoir de l'énergie réfléchie de la surface selon les projections de chevauchant partiellement du premier et second faisceaux, et

des moyens de traitement (80, 94, 100) reliés auxdits moyens sensibles à l'énergie en vue de produire un signal de sortie indicatif de la distance (R) à la surface éloignée, caractérisé en ce que les signaux de modulation des premiers et seconds faisceaux d'énergie optique sont décalés en phase d'un angle θ compris entre 120 et 180° et en ce que les moyens de traitement comprennent des moyens de détection de phase (94) en vue de produire un signal de sortie indicatif de la phase ⌀ du signal résultant, qui est la somme vectorielle des deux faisceaux réfléchis.

2. Appareil selon la revendication 1, caractérisé en ce que la phase du signal résultant est évaluée selon l'équation suivante:

$$\emptyset = \tan^{-1}\left[\frac{\sin\theta}{\dfrac{I_1}{I_2} \times \dfrac{(R+L)^2}{R^2} + \cos\theta}\right]$$

dans laquelle,

$I_1$ est l'intensité rayonnante du premier faisceau, et
$I_2$ est l'intensité rayonnante du second faisceau.

3. Appareil selon la revendication 1, caractérisé par des moyens oscillateurs (40) reliés en vue d'actionner les premiers et seconds moyens de production de faisceau (12, 18) et reliés aux moyens de détection de phase (94) en vue de fournir un signal de référence à ceux-ci.

4. Appareil selon la revendication 1, caractérisée par des troisièmes moyens de production de faisceau (112) conçus pour projeter un troisième faisceau d'énergie optique, ayant une troisième phase, vers la surface où le signal résultant issu des moyens sensibles à l'énergie est indicatif de la somme vectorielle des premier, second et troisième faisceaux.

5. Appareil selon la revendication 4, caractérisé en ce que la seconde phase est à 180° de la première phase et en ce que la troisième phase est à 90° de la première phase.

6. Appareil selon la revendication 1, caractérisé par des moyens de polarisation (250, 254) placés entre les premier et second moyens de production de faisceaux (12, 18) et la surface, et par un analyseur (260) placé entre la surface et les moyens sensibles à l'énergie (34) polarisés à 90° par rapport aux moyens de polarisation, en vue de minimiser les réflexions spéculaires atteignant les moyens sensibles à l'énergie.

# EP 0 213 544 B1

Fig. 1

Fig. 2

Fig. 3

1

Fig. 4

Fig. 5

Fig. 6